# EUROPEAN PATENT SPECIFICATION

(11) **EP 4 397 726 B1**
(45) Date of publication and mention of the grant of the patent: **26.08.2026**
(21) Application number: 22863976.1
(22) Date of filing: 07.06.2022
(51) Int. Cl.: C09D 11/38, C09D 11/101

(54) **PHOTOCURABLE INK COMPOSITION FOR INKJET PRINTING**
LICHTHÄRTBARE TINTENZUSAMMENSETZUNG FÜR TINTENSTRAHLDRUCK
COMPOSITION D'ENCRE PHOTOCURCISSABLE POUR IMPRESSION À JET D'ENCRE

(30) Priority: 30.08.2021 JP 2021140164
(43) Date of publication of application: 10.07.2024
(73) Proprietor: Sakata INX Corporation, Osaka-shi, Osaka 550-0002 (JP)
(72) Inventor: KAWAMOTO, Kenji, Osaka-shi, Osaka 550-0002 (JP); FUKE, Kazuhiro, Osaka-shi, Osaka 550-0002 (JP); MYOSE, Takuya, Osaka-shi, Osaka 550-0002 (JP); NAKASHIMA, Okinori, Osaka-shi, Osaka 550-0002 (JP)
(74) Representative: Grünecker Patent- und Rechtsanwälte PartG mbB
(86) International application number: PCT/JP2022/022872
(87) International publication number: WO 2023/032388

(56) References cited:
- WO-A1-2020/226018
- CN-A- 110 760 217
- JP-A- 2009 029 859
- JP-A- 2019 528 331
- JP-A- 2020 169 251
- JP-A- 2020 507 664
- JP-A- 2021 070 718
- JP-B2- 6 725 663

## Description

### Technical Field

The present invention relates to a photocurable inkjet printing ink composition.

### Background Art

While acylphosphine oxide-based photopolymerization initiators (TPO, OMNIRAD 819, etc.) are used as photopolymerization initiators for photocurable inkjet printing ink compositions, they must be added by at least certain amounts in order to achieve sufficient curability. However, increasing the amounts of photopolymerization initiators to be added presents disadvantages to the photocurable inkjet printing ink compositions, such as the photopolymerization initiators failing to dissolve in the polymerizable monomers, and the ink viscosities rising as a result.

Also, compounding formulations free of TPO and some other photopolymerization initiators are desired from the viewpoint of safety.

As described in Patent Literature 1, photopolymerization initiators using fluorenyl aminoketones are of public knowledge and considered high in sensitivity and excellent in anti-yellowing property. However, compounding them into inkjet compositions or combining them with specific oligomers is not known, and the literature does not mention specifically on adopting compounds having butyl groups in their fluorene rings.

Meanwhile, Patent Literature 2 describes an active energy ray-curable ink containing 1-(9,9-dibutyl-9H-fluorene-2-yl)-2-methyl-2-morpholinopropane-1-one that can also be used as an inkjet ink, has good LED curability, is free of odor, and demonstrates excellent fluidity. It should be noted that the only example cited of this active energy ray-curable ink containing an oligomer is one where it contains a bisphenol A epoxy acrylate oligomer (PE-210 (Miwon Specialty Chemical Co., Ltd.)). Additionally, JP 2020169251 might be cited as prior art.

### Background Art Literature

### Patent Literature

Patent Literature 1: Published Japanese Translation of PCT Patent Laid-open No. 2020-507664
Patent Literature 2: Japanese Patent Laid-open No. 2020-169251

### Summary of the Invention

### Problems to Be Solved by the Invention

The present invention was made in light of the aforementioned circumstances, and an object of the present invention is to provide a photocurable inkjet printing ink composition containing specific photopolymerizable initiators that, when blended in combination with specific oligomers, will demonstrate not only excellent LED curability and anti-yellowing property but also excellent solubility, while allowing its viscosity to be adjusted to an appropriate level even in the absence of solvent.

### Means for Solving the Problems

The inventors of the present invention found that the aforementioned object could be achieved by the photocurable inkjet printing ink composition below, which eventually led to the present invention as follows.
1. A photocurable inkjet printing ink composition containing 1.0 to 10.0% by mass of amine-modified oligomers relative to all photopolymerizable components, as well as 1.0 to 40.0 parts by mass of photopolymerization initiators expressed by formula (1) below, and 0.3 to 5.0 parts by mass of thioxanthone-based sensitizers relative to all photopolymerizable components representing 100 parts by mass. 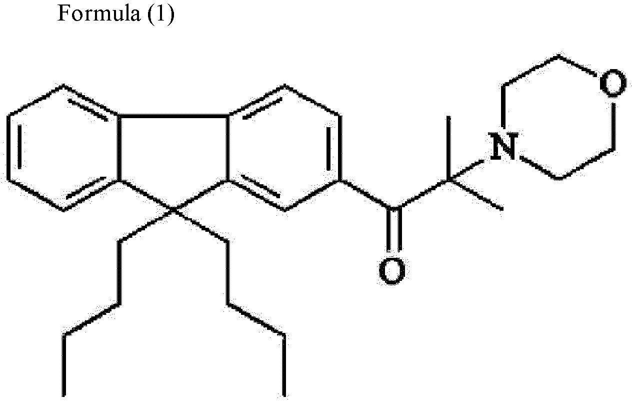
2. The photocurable inkjet printing ink composition according to 1, containing 25.0 to 85.0% by mass of monofunctional monomers as photopolymerizable components relative to all photopolymerizable components.
3. The photocurable inkjet printing ink composition according to 1 or 2, containing 10.0 to 70.0% by mass of polyfunctional monomers as photopolymerizable components relative to all photopolymerizable components.
4. The photocurable inkjet printing ink composition according to any one of 1 to 3, having a viscosity at 25°C of 5.0 to 28.0 mPa•s.

### Effects of the Invention

According to the present invention, a photocurable inkjet printing ink composition can be obtained that offers excellent LED curability, anti-yellowing property, and solubility, while also allowing its viscosity to be adjusted to an appropriate level without adding any solvent for the purpose of viscosity adjustment.

### Mode for Carrying Out the Invention

The photocurable inkjet printing ink composition proposed by the present invention (hereinafter also referred to simply as "ink composition") below is used in the same applications as conventional photocurable inkjet printing ink compositions.

### [Photopolymerizable Components]

The photopolymerizable components under the present invention consist of one or more types of monomers, oligomers, and polymers, and represent components that cure by reacting to light.

### (Monomers)

Monomers are components having ethylenic unsaturated bonds that will increase in molecular weight by undergoing polymerization as photopolymerizable components; however, they often remain as liquid components of relatively low molecular weight in a pre-polymerization state. Monomers are also used as solvents for dissolving separately compounded resin components or for the purpose of adjusting the viscosities of ink compositions.

Such monomers include monofunctional monomers having one ethylenic unsaturated bond in the molecule, and bi- or higher-functional monomers having two or more ethylenic unsaturated bonds in the molecule. Bi- or higher-functional monomers are able to crosslink molecules during the curing of ink compositions, thereby contributing to higher cure rates and formation of strong films. Monofunctional monomers do not have the aforementioned crosslinking ability but contribute to reducing the cure shrinkage associated with crosslinking. Various types of these monomers may be used in combination as necessary.

Any of the mono- or higher-functional monomers below may be used alone, or two or more types may be combined. It should be noted that, in this Specification, "(meth)acrylates" refer to "acrylates and/or methacrylates" while "(meth)acrylic acids" refer to "acrylic acids and/or methacrylic acids."

For the monofunctional monomers, unsaturated carboxylic acid-based compounds, alkyl (meth)acrylate-based compounds, hydroxyl group-containing (meth)acrylate-based compounds, halogen-containing (meth)acrylate-based compounds, ether group-containing (meth)acrylate-based compounds, carboxyl group-containing (meth)acrylate-based compounds, and other (meth)acrylate-based compounds, styrene-based compounds, N-vinyl-based compounds, allylate-based compounds, and other compounds having one ethylenic unsaturated bond may be used.

The content of monofunctional monomers relative to all photopolymerizable components is preferably 25.0% by mass or higher, or more preferably 35.0% by mass or higher, or yet more preferably 45.0% by mass or higher, or most preferably 55.0% by mass or higher. Also, it is preferably 85.0% by mass or lower, or more preferably 80.0% by mass or lower, or yet more preferably 75.0% by mass or lower.

### - Unsaturated Carboxylic Acid-based Compounds -

The unsaturated carboxylic acid-based compounds include, for example, (meth)acrylic acid, itaconic acid, crotonic acid, isocrotonic acid, fumaric acid, maleic acid and, other unsaturated carboxylic acids, as well as salts thereof and acid anhydrides thereof, etc.

### - Alkyl (Meth)acrylate-based Compounds -

The alkyl (meth)acrylate-based compounds include, for example, methyl (meth)acrylate, ethyl (meth)acrylate, propyl (meth)acrylate, isopropyl (meth)acrylate, n-butyl (meth)acrylate, i-butyl (meth)acrylate, t-butyl (meth)acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, isomyristyl (meth)acrylate, octadecyl (meth)acrylate, dicyclopentanyl (meth)acrylate, tridecyl (meth)acrylate, nonyl (meth)acrylate, hexadecyl (meth)acrylate, myristyl (meth)acrylate, isobornyl (meth)acrylate, cyclohexyl (meth)acrylate, norbornyl (meth)acylate, dicyclopentenyl (meth)acrylate, dicyclopentenyloxyethyl (meth)acrylate, 1-adamantyl (meth)acrylate, 3,5,5-trimethylcyclohexyl (meth)acrylate, 4-t-butylcyclohexyl (meth)acrylate, etc.

### - Hydroxyl Group-containing (Meth)acrylate-based Compounds -

The hydroxyl group-containing (meth)acrylate-based compounds include, for example, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, 1,6-hexanediol mono(meth)acrylate, glycerin mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-(meth)acryloyloxyethyl-2-hydroxypropyl phthalate, 2-ethylhexyl EO-modified (meth)acrylate, o-phenylphenol EO-modified acrylate, p-cumylphenol EO-modified (meth)acrylate, nonylphenol EO-modified (meth)acrylate, and other (poly)alkylene glycol-modified (meth)acrylates, etc.

### - Halogen-containing (Meth)acrylate-based Compounds -

The halogen-containing (meth)acrylate-based compounds include, for example, trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, 2,4,6-tribromophenol 3EO (ethylene oxide) adduct (meth)acrylate, etc.

### - Ether Group-containing (Meth)acrylate-based Compounds -

The ether group-containing (meth)acrylate-based compounds include, for example, 1,3-butylene glycol methyl ether (meth)acrylate, methoxy triethylene glycol (meth)acrylate, methoxy dipropylene glycol (meth)acrylate, methoxy tripropylene glycol (meth)acrylate, methoxy polypropylene glycol (meth)acrylate, ethoxy diethylene glycol (meth)acrylate, ethyl carbitol (meth)acrylate, 2-ethylhexyl carbitol (meth)acrylate, tetrahydrofurfuryl (meth)acrylate, cresyl polyethylene glycol (meth)acrylate, (meth)acrylic acid-2-(vinyloxyethoxy)ethyl, phenoxyethyl (meth)acrylate, p-nonylphenoxyethyl (meth)acrylate, p-nonylphenoxypolyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxydiethylene glycol (meth)acrylate, methoxypropylene glycol (meth)acrylate, methoxypolyethylene glycol (meth)acrylate (number of EO repeating units: 400, 700, etc.), 2-(2-ethoxyethoxy)ethyl (meth)acrylate, 2-ethoxyethyl (meth)acrylate, 2-methoxyethyl (meth)acrylate, 3-methoxybutyl acrylate, ethoxyethyl acrylate, ethoxyethoxyethyl (meth)acrylate, butoxyethyl (meth)acrylate, alkoxylated 2-phenoxyethyl (meth)acrylate (ethoxylated 2-phenoxyethyl (meth)acrylate, propoxylated 2-phenoxyethyl (meth)acrylate, etc.), alkoxylated nonylphenyl (meth)acrylate (ethoxylated (4) nonylphenol acrylate, etc.), 2-phenoxyethyl (meth)acrylate, paracumylphenoxyethylene glycol (meth)acrylate, methylphenoxyethyl acrylate, ethoxylated succinic acid (meth)acrylate, ethoxylated tribromophenyl acrylate, ethoxylated nonylphenyl (meth)acrylate and other alkoxy-based and/or phenoxy-based (meth)acrylates, etc.

### - Carboxyl Group-containing (Meth)acrylate-based Compounds -

The carboxyl group-containing (meth)acrylate-based compounds include, for example, β-carboxyethyl (meth)acrylate, succinic acid monoacryloyloxyethyl ester, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, 2-(meth)acryloyloxypropyl tetrahydrohydrogen phthalate, etc.

### - Other (Meth)acrylate-based Compounds -

The other (meth)acrylate-based compounds include, for example, benzyl acrylate, N,N-dimethylaminoethyl (meth)acrylate, N,N-dimethylaminopropyl (meth)acrylate, acryloylmorpholine, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified-2-(meth)acryloyloxyethyl acid phosphate, 2-hydroxy-1-(meth)acryloxy-3-methacryloxypropane, acryloyloxyethyl phthalate, 2-(meth)acryloyloxyethyl-2-hydroxyethyl phthalate, 2-(meth)acryloyloxypropyl phthalate, tricyclodecanemonomethylol (meth)acrylate, (meth)acrylic acid dimer, diethylaminoethyl (meth)acrylate, 2-(meth)acryloyloxyethyl succinic acid, 2-(meth)acryloyloxyethyl hexahydrophthalic acid, 2-ethylhexyl-diglycol (meth)acrylate, aminoethyl (meth)acrylate, ethyl carbitol acrylate, ethyl diglycol acrylate, quaternary salt of dimethylaminoethyl acrylate benzyl chloride, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylic acid-benzoic acid ester, (2-methyl-2-ethyl-1,3-dioxolane-4-yl)methyl (meth)acrylate, 1-(meth)acryloylpiperidine-2-one, 2-(meth)acrylic acid-1,4-dioxaspiro[4,5]deci-2-ylmethyl, N-(meth)acryloyloxyethyl hexahydrophthalimide, γ-butylolactone (meth)acrylate, caprolactone-modified tetrahydrofurfuryl acrylate, imide acrylate, (meth)acrylic acid vinyl, maleimide, etc.

### - Styrene-based Compounds -

The styrene-based compounds include, for example, styrene, vinyl toluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, divinylbenzene, etc.

### - N-vinyl-based Compounds -

The N-vinyl-based compounds include, for example, N-vinylpyrrolidone, N-vinylformamide, N-vinylacetamide, N-vinyl-2-caprolactam, N-vinylcarbazole, vinyl methyl oxazolidinone, etc.

### - Allylate-based Compounds -

The allylate-based compounds include, for example, allyl glycidyl ether, diallyl phthalate, triallyl trimellitate, isocyanuric acid triallylate, etc.

### - Other Compounds Having One Ethylenic Unsaturated Bond -

For the compounds having one ethylenic unsaturated bond, "other compounds having one ethylenic unsaturated bond," other than the aforementioned compounds, may be used.

Such compounds include, for example, vinyl acetate, vinyl monochloroacetate, vinyl benzoate, vinyl pivalate, vinyl butylate, vinyl laurate, divinyl adipate, vinyl crotonate, vinyl 2-ethylhexanoate, three-membered ring compounds (such as vinylcyclopropanes, 1-phenyl-2-vinylcyclopropanes, 2-phenyl-3-vinyloxylanes, 2,3-divinyloxylanes, etc.), cyclic ketene acetals (such as 2-methylene-1,3-dioxepane, polydioxolanes, 2-methylene-4-phenyl-1,3-dioxepane, 4,7-dimethyl-2-methylene-1,3-dioxepane, 5,6-benzo-2-methylene-1,3-dioxepane, etc.), etc.

### Of these monofunctional monomers, preferably ethyl carbitol (meth)acrylate, benzyl (meth)acrylate or acryloylmorpholine is contained.

Ethyl carbitol (meth)acrylate is contained by preferably 2.0% by mass or more, or more preferably 3.0% by mass or more, relative to all photopolymerizable components. Also, it is contained by preferably 25.0% by mass or less, or more preferably 20.0% by mass or less.

Benzyl (meth)acrylate is contained by preferably 3.0% by mass or more, or more preferably 10.0% by mass or more, relative to all photopolymerizable components. Also, it is contained by preferably 35.0% by mass or less, or more preferably 30.0% by mass or less.

Acryloylmorpholine is contained by preferably 4.0% by mass or more, or more preferably 5.0% by mass or more, relative to all photopolymerizable components. Also, it is contained by preferably 10.0% by mass or less, or more preferably 9.0% by mass or less.

For the polyfunctional monomers (compounds having two or more ethylenic unsaturated bonds), any known compounds having two or more ethylenic unsaturated bonds, such as the polyfunctional (meth)acrylate-based compounds, vinyl ether group-containing (meth)acrylate-based compounds, etc., below, may be used.

The content of polyfunctional monomers relative to all photopolymerizable components is preferably 10.0% by mass or higher, or more preferably 20.0% by mass or higher, or yet more preferably 25.0% by mass or higher, or most preferably 30.0% by mass or higher. Also, it is preferably 70.0% by mass or lower, or more preferably 60.0% by mass or lower, or yet more preferably 50.0% by mass or lower.

### - Polyfunctional (Meth)acrylate-based Compounds -

These include bifunctional monomers such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, tricyclodecane dimethylol dicaprolactonate di(meth)acrylate, cyclohexanedimethanol di(meth)acrylate, dicyclopentanyl di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, bisphenol F tetraethylene oxide adduct dicaprolactonate di(meth)acrylate, and other di(meth)acrylates of glycerin, pentaerythritol, diglycerin, ditrimethylolpropane, dipentaerythritol, and other polyalcohols;
trifunctional monomers such as glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate, as well as 3EO (ethylene oxide)-modified products, 6EO-modified products, and 9EO-modified products thereof (3EO-modified trimethylolpropane tri(meth)acrylate, 3EO-modified trimethylolethane tri(meth)acrylate, 3EO-modified trimethylolhexane tri(meth)acrylate, etc.); and tetra- or higher-functional monomers such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, tripentaerythritol polyalkylene oxide hepta(meth)acrylate, etc. Of these, trimethylolpropane triacrylate (TMPTA: trifunctional), ditrimethylolpropane tetraacrylate (DITMPTA: tetrafunctional), dipentaerythritol hexaacrylate (DPHA: hexa-functional), hexanediol diacrylate (HDDA: bi-functional), etc., are preferred.

### - Vinyl Ether Group-containing (Meth)acrylate-based Compounds -

The vinyl ether group-containing (meth)acrylate-based compounds include, for example, (meth)acrylic acid-2-vinyloxyethyl, (meth)acrylic acid-3-vinyloxypropyl, (meth)acrylic acid-1-methyl-2-vinyloxyethyl, (meth)acrylic acid-2-vinyloxypropyl, (meth)acrylic acid-4-vinyloxybutyl, (meth)acrylic acid-1-methyl-3-vinyloxypropyl, (meth)acrylic acid-1-vinyloxymethylpropyl, (meth)acrylic acid-2-methyl-3-vinyloxypropyl, (meth)acrylic acid-3-methyl-3-vinyloxypropyl, (meth)acrylic acid-1,1-dimethyl-2-vinyloxyethyl, (meth)acrylic acid-3-vinyloxybutyl, (meth)acrylic acid-1-methyl-2-vinyloxypropyl, (meth)acrylic acid-2-vinyloxybutyl, (meth)acrylic acid-4-vinyloxycyclohexyl, (meth)acrylic acid-5-vinyloxypentyl, (meth)acrylic acid-6-vinyloxyhexyl, (meth)acrylic acid-4-vinyloxymethylcyclohexylmethyl, (meth)acrylic acid-3-vinyloxymethylcyclohexylmethyl, (meth)acrylic acid-2-vinyloxymethylcyclohexylmethyl, (meth)acrylic acid-p-vinyloxymethylphenylmethyl, (meth)acrylic acid-m-vinyloxymethylphenylmethyl, (meth)acrylic acid-o-vinyloxymethylphenylmethyl, (meth)acrylic acid-2-(vinyloxyisopropoxy)ethyl, (meth)acrylic acid-2-(vinyloxyethoxy)propyl, (meth)acrylic acid-2-(vinyloxyethoxy)isopropyl, (meth)acrylic acid-2-(vinyloxyisopropoxy)propyl, (meth)acrylic acid-2-(vinyloxyisopropoxy)isopropyl, (meth)acrylic acid-2-(vinyloxyethoxyethoxy)ethyl, (meth)acrylic acid-2-(vinyloxyethoxyisopropoxy)ethyl, (meth)acrylic acid-2-(vinyloxyisopropoxyethoxy)ethyl, (meth)acrylic acid-2-(vinyloxyisopropoxyisopropoxy)ethyl, etc.

Of these polyfunctional monomers, preferably 3EO-modified trimethylolpropane triacrylate and 1,6-hexanediol diacrylate are contained.

3EO-modified trimethylolpropane triacrylate is contained by preferably 2.0% by mass or more, or more preferably 3.0% by mass or more, relative to all photopolymerizable components. Also, it is contained by preferably 12.0% by mass or less, or more preferably 10.0% by mass or less.

1,6-hexanediol diacrylate is contained by preferably 10.0% by mass or more, or more preferably 20.0% by mass or more, relative to all photopolymerizable components. Also, it is contained by preferably 60.0% by mass or less, or more preferably 50.0% by mass or less.

### (Oligomers)

Oligomers are components that will increase in molecular weight as a result of polymerization of the ethylenic unsaturated bonds in the molecule. Since they are inherently components of relatively high molecular weight, oligomers are also used for the purpose of adding appropriate viscosity and elasticity to ink compositions. Additionally, oligomers have relatively high polarity, and thus are expected to demonstrate the effect of adding, to cured ink compositions, adhesiveness to nonabsorbent media.

For these oligomers, amine-modified oligomers are adopted.

The amine-modified oligomers are not specifically limited so long as they are amine-modified (meth)acrylate oligomers having at least one amino group and at least one (meth)acryloyl group or at least two (meth)acryloyl groups in the molecule. Also, the number of (meth)acryloyl groups the aforementioned amine-modified (meth)acrylate oligomers each have in the molecule is preferably 2 or greater, or more preferably 3 or greater but no greater than 6, or yet more preferably 3 or 4. When the number of (meth)acryloyl groups is 2 or greater, the oligomers will react easily with the polymerizable compounds as polyfunctional amine-modified (meth)acrylate oligomers, and the viscosity of the photocurable inkjet printing ink composition will likely fall within an appropriate range.

The amine-modified (meth)acrylate oligomers may be synthesized products comprising desired monomers that have been polymerized together, or they may be commercial products. Examples include GENOMER 5161, GENOMER 5275 (RAHN AG), CN371, CN371 NS, CN373, CN383, CN384, CN386, CN501, CN503, CN550, CN551 (Sartomer Inc.), EBECRYL 80, EBECRYL 81, EBECRYL 83, EBECRYL 7100, EBECRYL 84, EBECRYL P115 (Daicel-Allnex Ltd.), LAROMERPO 83F, LAROMER PO 84F, LAROMER LR8946, LAROMER LR8956, LAROMER LR8996, LAROMER LR8894 (BASF SE), AgiSyn 001, AgiSyn 002, AgiSyn 003, AgiSyn 008 (DSM Coating Resin Ltd.), PHOTOMER 4771, PHOTOMER 4775, PHOTOMER 4967, PHOTOMER 5096, PHOTOMER 5662, PHOTOMER 5930 (Cognis), DOUBLECURE EPD, DOUBLECURE OPD, DOUBLECURE 115, DOUBLECURE 225, DOUBLECURE 645, PolyQ 222, PolyQ 226, PolyQ 224, and PolyQ 101 (Double Bond Chemical Ind. Co., Ltd.). Of these, polyfunctional amine-modified oligomers having two or more photopolymerizable functional groups in the molecule are preferred, while those whose photopolymerizable functional groups are (meth)acryloyl groups are more preferred.

The amine-modified (meth)acrylate oligomers that can be used in the present invention are contained by 1.0 to 10.0% by mass relative to all polymerizable components in the photocurable inkjet printing ink composition. In particular, they are contained by preferably 2.0% by mass or more, or more preferably 3.0% by mass or more. Also, they are contained by preferably 9.0% by mass or less, or more preferably 8.0% by mass or less, or yet more preferably 7.0% by mass or less.

Although the amine-modified oligomers are not limited in viscosity, preferably their viscosity is 2000 cps or lower at 25°C in order to bring the viscosity of the entire photocurable inkjet printing ink composition to an appropriate range.

Other oligomers that may be used include epoxy-modified (meth)acrylates, examples of which include esters of hydroxyl groups produced after the epoxy groups contained in epoxy resins or other epoxy compounds are ring-opened with acids or bases, and (meth)acrylic acids; rosin-modified epoxy acrylates; polyester-modified (meth)acrylates, examples of which include esters of terminal hydroxyl groups of polycondensation products of dibasic acids and diols, and (meth)acrylic acids; polyether-modified (meth)acrylates, examples of which include esters of terminal hydroxyl groups of polyether compounds and (meth)acrylic acids; and urethane-modified (meth)acrylates, examples of which include esters of terminal hydroxyl groups in the condensation products of polyisocyanate compounds and polyol compounds, (meth)acrylic acids; and the like.

Such oligomers having ethylenic unsaturated bonds include, for example, oligomers of polydiallyl phthalate, neopentyl glycol oligo(meth)acrylate, 1,4-butanediol oligo(meth)acrylate, 1,6-hexanediol oligo(meth)acrylate, trimethylolpropane oligo(meth)acrylate, pentaerythritol oligo(meth)acrylate, urethane (meth)acrylate, epoxy (meth)acrylate, polyester (meth)acrylate, rosin-modified epoxy (meth)acrylate, unsaturated polyesters, polyether (meth)acrylate, acrylic-based resins having unreacted unsaturated groups, unsaturated polyethers, unsaturated polyamides, unsaturated polyurethanes, acrylic-modified phenol-based resins, acrylated amine compounds, and the like.

Such oligomers are commercially available and can be obtained under the product names of, for example, the CN and SR series by Sartomer Inc., ARONIX M-6000 series, 7000 series, 8000 series, ARONIX M-1100, ARONIX M-1200 and ARONIX M-1600 by Toagosei Co., Ltd., NK-ESTER and NK-OLIGO by Shin-Nakamura Chemical Co., Ltd., LIGHT ACRYLATE, LIGHT ESTER, EPOXY ESTER, URETHANE ACRYLATE and HIGH-FUNCTIONAL OLIGOMER series by Kyoeisha Chemical Industry Co., Ltd., SPECIAL ACRYLIC MONOMER series by Osaka Organic Chemical Industry Ltd., ACRYESTER and DIABEAM OLIGOMER series by Mitsubishi Rayon Co., Ltd., KAYARAD and KAYAMER series by Nippon Kayaku Co., Ltd., (METH)ACRYLIC ACID/METHACRYLIC ACID ESTER MONOMER series by Nippon Shokubai Co., Ltd., NICHIGO-UV SHIKOH URETHANE ACRYLATE OLIGOMER series by Nippon Synthetic Chemical Industry Co., Ltd., CARBOXYLIC ACID VINYL ESTER MONOMER series by Shin-Etsu Vinyl Acetate Co., Ltd., FUNCTIONAL MONOMER series by Kohjin Co., Ltd., EBECRYL, ACA, KRM, IRR, RDX and OTA series by Daicel-Allnex Ltd., LAROMER series by BASF SE, PHOTOMER series by Cognis, ART RESIN series by Negami Chemical Industrial Co., Ltd., BLEMMER series by Nichiyu Chemical Co., Ltd., NEW FRONTIER series by DKS Co., Ltd., MIRAMER series by Miwon Specialty Chemical Co., Ltd., AgiSyn series by DSM Company, etc.

It should be noted that, while bisphenol A epoxy acrylate oligomers may be used together with the polyfunctional amine-modified oligomers, preferably they are not used in order to demonstrate, without fail, the effect of excellent LED curability attributable to the polyfunctional amine-modified oligomers.

Also, polyurethane oligomers and/or polyurethane polyurea oligomers that are made from polyester polyols obtained using plant-based dicarboxylic acid components and diol components, may be adopted in consideration of the environment.

As for plant oil-modified polyfunctional polyester acrylate oligomers, plant oil-modified polyester acrylate oligomers having two to six acrylate groups in the molecule may be used without limitation.

Of these, preferably one or more types selected from the group that consists of EBECRYL 450, 452, 820, 1622, and tall oil fatty acid-modified hexa-functional polyester acrylates (such as AgiSyn 716, etc.) are used, as doing so can increase the biomass degree of the photocurable inkjet printing ink composition.

Any of these oligomers may be used alone, or two or more types may be combined.

### (Polymers)

Polymers, being curable resins having ethylenic unsaturated bonds, are components that will increase in molecular weight together with the aforementioned monomers and oligomers, and because they have large molecular weight even before active energy rays are irradiated, these components can help improve the viscoelasticity of ink compositions. For example, polymers are used in a dissolved or dispersed state in monomers that are low-viscosity liquids. Polymers having ethylenic unsaturated bonds include polydiallyl phthalate, acrylic resins having unreacted unsaturated groups, acrylic-modified phenol resins, etc. Of these, polydiallyl phthalate can be used favorably as it has superior compatibility with the aforementioned monomers and oligomers.

Also, while polymers having ethylenic unsaturated bonds need not be contained, the content of polymers with ethylenic unsaturated bonds, if contained, is preferably 0 to 50.0% by mass, or more preferably 0 to 30.0% by mass, or yet more preferably 0 to 20.0% by mass, relative to all photopolymerizable components.

### [Photopolymerization Initiators]

The photocurable inkjet printing ink composition proposed by the present invention contains photopolymerization initiators expressed by formula (1) below.

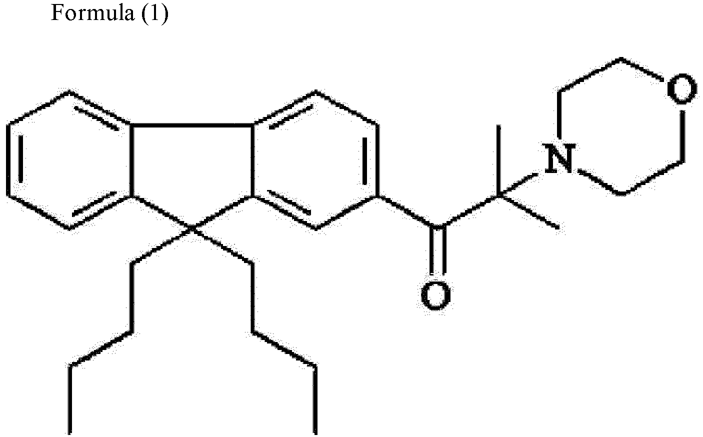

The photopolymerization initiators expressed by formula (1) are contained by 1.0 to 40.0 parts by mass relative to all photopolymerizable components representing 100 parts by mass. In addition, they are contained by preferably 1.5 parts by mass or more, or more preferably 5.0 parts by mass or more. Also, they are contained by preferably 37.0 parts by mass or less, or more preferably 30.0 parts by mass or less.

The photopolymerization initiators that may or may not be used together are not specifically limited so long as they initiate polymerization upon receiving active energy rays, to the extent that the effects of the present invention are not impaired, and any photopolymerization initiators used in photocurable inkjet printing ink compositions may be used.

Such photopolymerization initiators include, for example, benzoin ether-based photopolymerization initiators, acetophenone-based photopolymerization initiators, α-ketol-based photopolymerization initiators, aromatic sulfonyl chloride-based photopolymerization initiators, photoactive oxime-based photopolymerization initiators, benzoin-based photopolymerization initiators, benzyl-based photopolymerization initiators, benzophenone-based photopolymerization initiators, ketal-based photopolymerization initiators, triazine-based photopolymerization initiators, acylphosphine oxide-based photopolymerization initiators, etc. Of these, triazine-based photopolymerization initiators and acylphosphine oxide-based photopolymerization initiators are preferred from the viewpoint of their good curability under light-emitting diode (LED) rays. Any of the aforementioned photopolymerization initiators may be used alone, or two or more types may be combined.

Such photopolymerization initiators include, for example, bis(2,4,6-trimethylbenzoyl)phenylphosphine oxide, ethoxy(2,4,6-trimethylbenzoyl)phenylphosphine oxide, benzophenone, diethyl thioxanthone, 2-methyl-1-(4-methylthio)phenyl-2-morpholinopropane-1-one, 4-benzoyl-4'-methyldiphenyl sulfide, 1-chloro-4-propoxythioxanthone, isopropyl thioxanthone, 2-hydroxy-2-methyl-1-phenylpropane-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, 2-benzyl-2-dimethylamino-1-(morpholinophenyl)-butane-1-one, etc.

### (Sensitizers)

The photocurable inkjet printing ink composition proposed by the present invention contains sensitizers from the viewpoint of improving its curability. Any of the aforementioned sensitizers may be used alone, or two or more types may be combined.

The sensitizers include, for example, 9,10-dibutoxyanthracene, 9,10-diethoxyanthracene, 9,10-dipropoxyanthracene, 9,10-bis(2-ethylhexyloxy)anthracene and other anthracene-based sensitizes, 2,4-diethylthioxanthone, 2,4-diethylthioxanthene-9-one, 2-isopropylthioxanthone, 4-isopropylthioxanthone and other thioxanthone-based sensitizes, and the like, of which at least thioxanthone-based sensitizers are used. Commercial products of the aforementioned sensitizers include anthracene-based sensitizers of the product names DBA and DEA (both by Kawasaki Kasei Chemicals Ltd.), and thioxanthone-based sensitizers of the product names DETX and ITX (Lambson Ltd.), for example.

From the viewpoint of preventing their excessive addition, thioxanthone-based sensitizers are contained by 0.3 to 5.0 parts by mass relative to all photopolymerizable components representing 100 parts by mass. Furthermore, preferably they are contained by 1.0 part by mass or more, and 4.0 parts by mass or less. It should be noted that, as is the case of the present invention, 2,4-diethylthioxanthone and other thioxanthone-based sanitizers can be used.

Under the present invention, preferably photopolymerization initiators and/or sensitizers are contained by 7.0 to 30.0 parts by mass in total relative to all photopolymerizable components representing 100 parts by mass.

### [Pigments]

The photocurable inkjet printing ink composition proposed by the present invention contains pigments. Pigments are components added for the purpose of adding coloring power, concealing power, etc., to ink compositions, and include coloring pigments, white pigments, metal powders, etc. For such pigments, those traditionally used in ink compositions, such as the organic and/or inorganic pigments below, for example, can be used without specific limitations.

The pigments include dye lake pigments as well as azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, flavanthrone-based, quinophthalone-based, pyranthrone-based, and indanthrone-based pigments, along with various types of inorganic pigments, for example.

Of these pigments, examples include disazo yellow (Pigment Yellow 12, Pigment Yellow 13, Pigment Yellow 14, Pigment Yellow 17, Pigment Yellow 1), hansa yellow, and other yellow pigments, brilliant carmine 6B, lake red C, watching red, quinacridone, and other magenta pigments, phthalocyanine blue, phthalocyanine green, alkali blue, and other cyan pigments, titanium oxide, red iron oxide, antimony red, cadmium yellow, cobalt blue, Prussian blue, ultramarine blue, iron black, chrome oxide green, carbon black, graphite, and other colored pigments (including achromatic coloring pigments of white color, black color, etc.), aluminum paste, bronze powder, and other metal powders, for example.

The content of pigments, examples of which include 8 to 30% or so by mass relative to the entire ink composition according to the desired degrees of coloring, is not specifically limited. It should be noted that, when preparing a colored ink composition, pigments and dyes of other colors can be combined as complementary colors, or ink compositions of other colors can be added.

### (Pigment Dispersants/Pigment Dispersing Resins)

If the photocurable inkjet printing ink compositing proposed by the present invention adopts pigments as colorants, then pigment dispersants and/or pigment dispersing resins may be blended in.

For the pigment dispersants, one or more types selected from the group that consists of known nonionic surfactants, anionic surfactants, cationic surfactants, and amphoteric surfactants may be used.

For the surfactants, one or more types selected from the group that consists of, for example, silicone-based surfactants (such as polyether-modified silicone oil, polyester-modified polydimethylsiloxane, polyester-modified methylalkylpolysiloxane, etc.), fluorine-based surfactants, oxyalkylene ether-based surfactants, acetylene glycol-based surfactants, phosphorus-based surfactants, sulfonic acid-based surfactants, etc., may be used.

Also, for the pigment dispersing resins, one or more types selected from the group that consists of polymeric dispersants (such as carbodiimide-based, polyester-based, polyamine-based, polyesteramine-based, polyurethane-based, fatty acid amine-based, polyacrylate-based, polycaprolactone-based, polysiloxane-based, multichain polymeric nonionic-based, polymeric ionic-based dispersants, etc.), for example, may be used.

If the photocurable inkjet printing ink composition proposed by the present invention contains pigment dispersants and pigment dispersing resins, preferably they are contained by 1 to 200 parts by mass relative to the total amount of pigments used representing 100 parts by mass.

### (Other Components)

The photocurable inkjet printing ink composition proposed by the present invention may contain surfactants, organic solvents, polymerization inhibitors, storability improving agents, UV absorbents, antioxidants, defoaming agents, antifungal agents, rustproofing agents, thickening agents, humectants, pH adjusting agents and various other types of additives as other components. Also, resins that function as a vehicle but are not curable may or may not be blended in. Additionally, solvents may or may not be contained.

### (Surfactants)

The photocurable inkjet printing ink composition proposed by the present invention may use, as leveling agents, any known surfactants used in photocurable inkjet printing ink compositions without specific limitations according to the inkjet head used, such as nonionic surfactants, cationic surfactants, anionic surfactants, and betaine surfactants. Specific examples of the aforementioned surfactants include, for instance, polyether-modified silicone oil, polyester-modified polydimethylsiloxane, polyester-modified methylalkylpolysiloxane, and other silicone-based surfactants, fluorine-based surfactants, acetylene-based surfactants, etc. Any of the aforementioned surfactants may be used alone, or two or more types may be combined.

The aforementioned silicone-based surfactants include BYK-307, BYK-315N, BYK-331, BYK-333, BYK-347, BYK-348, BYK-349, BYK-345, BYK-377, BYK-378, BYK-3455 (BYK-Chemie GmbH), etc.

The aforementioned fluorine-based surfactants include F-410, F-444, F-533 (DIC Corporation), FS-65, FS-34, FS-35, FS-31, FS-30 (DuPont de Nemours, Inc.), etc.

The aforementioned acetylene-based surfactants include DYNOL 607, DYNOL 609, OLFINE E1004, OLFINE E1010, OLFINE E1020, OLFINE PD-001, OLFINE PD-002W, OLFINE PD-004, OLFINE PD-005, OLFINE EXP. 4001, OLFINE EXP. 4200, OLFINE EXP. 4123, OLFINE EXP. 4300 (Nisshin Chemical Industry Co., Ltd.), SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, SURFYNOL 465 (Evonik Industries AG), etc.

In the photocurable inkjet printing ink composition proposed by the present invention, the percentage of the aforementioned surfactants is preferably 0.005% by mass or higher, or more preferably 0.01% by mass or higher, from the viewpoint of lowering the surface tension of the ink composition and thereby increasing its discharge stability from the inkjet head, while it is preferably 1.5% by mass or lower, or more preferably 1% by mass or lower, from the viewpoint of suppressing bubbles generating in the ink composition during blending and thereby increasing its discharge stability.

If surface conditioners are contained, the content of surface conditioners is not specifically limited, but preferably their content is such that the surface tension of the photocurable inkjet printing ink composition falls between 22.0 and 32.0 mN/m, and more preferably the content is 0.10 to 1.50% by mass in the photocurable inkjet printing ink composition.

### (Solvents)

The photocurable inkjet printing ink composition proposed by the present invention may have solvents blended in it as necessary. The aforementioned solvents include ester-based organic solvents, ether-based organic solvents, ether ester-based organic solvents, ketone-based organic solvents, aromatic hydrocarbon solvents, nitrogen-containing organic solvents, etc. Also included in the aforementioned solvents are those whose boiling point at 1 atmospheric pressure is 150 to 220°C. Preferably use of the aforementioned solvents is minimized from the viewpoints of curability of the ink composition, environmental issues, etc., and from this point of view, the percentage of the aforementioned solvents is preferably 5% by mass or lower, or more preferably 2% by mass or lower, in the ink composition.

Known polymerization inhibitors may be contained for the purpose of preventing polymerization while the photocurable inkjet printing ink composition is in storage. Preferred examples of the polymerization inhibitors include butylhydroxytoluene and other phenol compounds, as well as tocopherol acetate, nitrosoamine, benzotriazole, hindered amine, etc., where butylhydroxytoluene is a more preferred example. Adding such polymerization inhibitors suppress the ink composition from thickening as a result of the polymerization reaction progressing during storage. Examples of the content of polymerization inhibitors include 0.1 to 1.0 parts or so by mass relative to all polymerizable components representing 100 parts by mass.

### (UV Absorbent)

The UV absorbents include benzophenone-based UV absorbents, benzotriazole-based UV absorbents, salicylate-based UV absorbents, hydroxyphenyl triazine-based UV absorbents, cyanoacrylate-based UV absorbents, nickel complex salt-based UV absorbents, etc.

### (Antioxidants)

The antioxidants include phenol-based antioxidants, amine-based antioxidants, sulfur-based antioxidants, phosphorus-based antioxidants, etc.

### (Defoaming Agents)

The defoaming agents include silicone-based defoaming agents, Pluronic (registered trademark)-based defoaming agents, etc.

The viscosity at 25°C of the photocurable inkjet printing ink composition proposed by the present invention is preferably 5.0 mPa•s or higher, or more preferably 10.0 mPa•s or higher, or yet more preferably 15.0 mPa•s or higher, while it is preferably 28.0 mPa•s or lower, or more preferably 26.0 mPa•s or lower, or yet more preferably 25.0 mPa•s or lower. Viscosity adjusting agents, etc., are blended in the ink composition as necessary. It should be noted that the viscosities mentioned in the Specification of the present application for patent are viscosities measured using a type-E viscometer (RE100L Viscometer, manufactured by Toki Sangyo Co., Ltd.) under the conditions of 25°C and 10 rpm.

Also, preferably the surface tension is 22.0 to 32.0 mN/m.

### <Methods for Preparing Photocurable Inkjet Printing Ink Composition>

Next, the methods for manufacturing the photocurable inkjet printing ink composition proposed by the present invention using these materials are explained.

The photocurable inkjet printing ink composition proposed by the present invention may be obtained by, for example, dispersing and mixing the components using a wet circulation mill, bead mill, ball mill, sand mill, attritor, roll mill, DCP mill, agitator, Henschel mixer, colloid mill, ultrasonic homogenizer, high-pressure homogenizer (Microfluidizer, Nanomizer, Ultimizer, Genus PY, DeBEE 2000, etc.), pearl mill or other dispersion machine, and if necessary, adjusting the viscosity of the photocurable inkjet printing ink composition. It should be noted that the photocurable inkjet printing ink composition may also be prepared by mixing the pigments with the aforementioned pigment dispersants and the aforementioned photopolymerizable monomers to obtain a base ink composition beforehand, and then adding thereto the remainder of the aforementioned components to a desired compositional makeup.

### <Methods for Printing>

The methods for printing using the photocurable inkjet printing ink composition proposed by the present invention are explained.

The methods, which do not specifically limit the inkjet printing device used, include, for example, one whereby the photocurable inkjet printing ink composition is supplied to the printer head of a printer device of inkjet recording type, the ink composition is discharged from this printer head onto the base material to be printed, after which the ink composition that has landed on the base material is exposed to active energy rays and cured. The active energy rays include ultraviolet rays, electron beams, visible light, etc., irradiated from light-emitting diodes (LEDs) as well as various lamps and electrodes. In particular, it demonstrates excellent curability under ultraviolet rays from light sources comprising light-emitting diodes (LEDs).

Also, the base material is not specifically limited, either, so long as it is a base material to which conventionally-known photocurable inkjet printing ink compositions can be applied, where the aforementioned base material may be plastic, paper, capsule, gel, metal foil, glass, wood, fabric, etc. Also, in the case of the aforementioned plastic, the applicable base material includes, for example, one or more types selected from the group that consists of, for example, polyester-based polymers (such as polyethylene terephthalate (PET), polyethylene naphthalate, etc.), cellulose-based polymers (such as diacetyl cellulose, triacetyl cellulose (TAC), etc.), polycarbonate-based polymers, polyacrylic-based polymers (such as polymethyl methacrylate, etc.), vinyl chloride-based polymers, polyolefin-based polymers (such as polyethylene, polypropylene, polyolefin polymers having cyclic or norbornene structures, ethylene-propylene copolymer, etc.), polyamide-based polymers (such as nylon, aromatic polyamide polymers, etc.), polystyrene-based polymers (such as polystyrene, acrylonitrile-styrene copolymer, etc.), polyimide-based polymers, polysulfone-based polymers, polyether sulfone-based polymers, polyether ketone-based polymers, polyphenyl sulfide-based polymers, polyvinyl alcohol-based polymers, polyvinylidene chloride-based polymers, polyvinyl butyral-based polymers, polyarylate-based polymers, polyoxymethylene-based polymers, polyepoxy-based polymers, as well as blends of these polymers, and the like.

The methods for printing and curing the ink composition proposed by the present invention specifically include one whereby the ink composition proposed by the present invention is discharged from the inkjet head onto the base material, after which the coating film of the ink composition proposed by the present invention that has landed on the base material is exposed to light and cured.

For example, the discharge to the base material (printing of images) may be implemented by supplying the ink composition proposed by the present invention to a low-viscosity-compatible printer head equipped on the inkjet recording printer and then discharging the ink composition from the printer head so that the thickness of the coating film will become 1 to 60 µm, for example, above the base material. Also, the exposure to light and curing (curing of images) may be implemented by irradiating light onto the coating film of the ink composition proposed by the present invention that has been applied on the base material as images.

For the printer device of inkjet recording type with which to print the ink composition proposed by the present invention, any conventionally-used printer device of inkjet recording type may be utilized. It should be noted that, if a continuous printer device of inkjet recording type is used, conductivity-adding agents are further added to the ink composition proposed by the present invention to adjust its conductivity.

The light sources for the aforementioned curing of coating film include ultraviolet rays (UV), ultraviolet rays (light-emitting diodes (LEDs)), electron beams, visible light, etc., where light-emitting diodes (LEDs) generating ultraviolet rays whose emission peak wavelength falls in a range of 350 to 420 nm are preferred in consideration of the environment.

The viscosity of the photocurable inkjet printing ink composition proposed by the present invention, being a value measured at 25°C under the conditions below, is preferably 5.0 mPa•s or higher, or more preferably 10.0 mPa•s or higher, or yet more preferably 15.0 mPa•s or higher, while it is preferably 28.0 mPa•s or lower, or more preferably 26.0 mPa•s or lower, or yet more preferably 25.0 mPa•s or lower.

### Examples

The present invention is explained in greater detail below by citing examples; however, the present invention is not limited to these examples alone. It should be noted that, unless otherwise specified, "%" refers to "% by mass," while "part" refers to "part by mass." Additionally, the numbers indicating the quantities of the materials in the table also represent "part(s) by mass."

The photocurable inkjet printing ink compositions in the Examples and Comparative Examples shown in Table 1 below were prepared, and the test results and properties relating to the respective photocurable inkjet printing ink compositions are shown in Table 1.

### (Photo curable Inkjet Printing Ink Compositions)

The components used in Table 1 below are as follows.
SOLSPERSE 56000: Polymeric dispersant (SOLSPERSE 56000, Lubrizol Japan Limited)
BYKJET 9151: Polymeric dispersant (BYKJET-9151, BYK-Chemie GmbH)
SOLSPERSE 36000: Polymeric dispersant (SOLSPERSE 36000, Lubrizol Japan Limited)
AJISPER PB821: Ester-based dispersant (Ajinomoto Fine-Techno Co., Inc.)
CN371 NS: Amine-modified (meth)acrylate oligomer (SARTOMER CN371 NS, Sartomer Arkema Inc.)
MIRAMER PE-210: Bisphenol A epoxy acrylate oligomer (MIRAMER PE-210, Miwon Specialty Chemical Co., Ltd.)
OMNIRAD 819: Bis(2,4,6-trimethylbenzoyl) phenylphosphine oxide (IGM Resins B.V.)
TR-20400: 1-(9,9-dibutyl-9H-fluorene-2-yl)-2-methyl-2-morpholinopropane-1-one (Tronly)
OMNIRAD EDB: Ethyl diethylaminobenzoate (IGM Resins B.V.)
OMNIRAD DETX: 2,4-diethylthioxanthone (IGM Resins B.V.)
UV22: Quinone-based polymerization inhibitor (BASF SE)
BYK-377: 100% solids content, polyether-modified siloxane-type surfactant (BYK-Chemie GmbH)

### (Preparation of Photocurable Inkjet Printing Ink Compositions)

The components were blended to achieve the compositional makeups for blending (% by mass) shown in Table 1, and then mixed under agitation, to obtain the photocurable inkjet printing ink compositions in the Examples and Comparative Examples.

### <Methods for Evaluation>

### (Viscosity)

The photocurable inkjet printing ink compositions obtained in the Examples and Comparative Examples were measured for viscosity using a type-E viscometer (RE100L Viscometer, manufactured by Toki Sangyo Co., Ltd.) under the conditions of 25°C in temperature and 10 rpm in rotor speed.

### (Solubility)

The photopolymerization initiators, polyfunctional monomers, and monofunctional monomers were agitated for 1 hour at room temperature based on the blending ratios in Table 1, after which the obtained liquids were passed through a 2000-mesh screen and evaluated according to the evaluation criteria below by visually checking for mesh-like residues.
∘: No residue is left.
×: Solid residue is left.

### (LED Curability)

The photocurable inkjet printing ink compositions obtained in the Examples and Comparative Examples were each applied on the surface of a PET film using a No. 6 bar coater (ϕ0.15 mm), to obtain each coated product. Next, they were irradiated with LED rays of 395 nm in wavelength using a LED lamp manufactured by Phoseon Technology Inc., under the irradiation condition of 80 mJ/cm² in cumulative light quantity, and evaluated according to the evaluation criteria below.
∘: The ink coating film is not removed when rubbed with a cotton swab.
×: The ink coating film is removed when rubbed with a cotton swab.

### (Anti-yellowing Property)

The photocurable inkjet printing ink compositions obtained in the Examples and Comparative Examples were each applied on the surface of a PET film using a No. 6 bar coater (ϕ0.15 mm), to obtain each coated product. Next, they were irradiated with LED rays of 395 nm in wavelength using a LED lamp manufactured by Phoseon Technology Inc., under the irradiation condition of 200 mJ/cm² in cumulative light quantity, to completely cure the coating films.

The b-value was measured using a spectrophotometer (eXact, manufactured by X-Rite, Inc.) immediately after the complete curing and after 24 hours of standing at room temperature, and evaluated according to the evaluation criteria below.
∘: The change in b-value after the standing is less than 3 compared to before the standing.
×: The change in b-value after the standing is 3 or greater compared to before the standing.

**[Table 1]**

| | | Examples | | | | | | |
|---|---|---|---|---|---|---|---|---|
| | | 1 | 2 | 3 | 4 | 5 | 6 | 7 |
| Pigments | Pigment Yellow 150 | | | | | | | |
| | Pigment Red 122 | | | | | | | |
| | Pigment Red 254 | | | | | | | |
| | Pigment Blue 15:4 | | | | | | | 2.60% |
| | Pigment White 6 | | | | | 20.00% | 20.00% | |
| | Pigment Black 7 | 1.60% | 1.60% | 1.60% | 1.60% | | | |
| Pigment dispersants | SOLSPERSE 56000 | 0.64% | 0.64% | 0.64% | 0.64% | | | 1.04% |
| | BYKJET 9151 | | | | | | | |
| | SOLSPERSE 36000 | | | | | 1.00% | 1.00% | |
| | AJISPER PB821 | | | | | 1.00% | 1.00% | |
| Amine-modified oligomer | CN371 NS | 5.00% | 5.00% | 5.00% | 5.00% | 5.00% | 5.00% | 2.00% |
| Bisphenol A epoxy acrylate oligomer | MIRAMER PE-210 | | | | | | | |
| Polyfunctional monomers | 3EO-modified trimethylolpropane triacrylate | 3.00% | 3.00% | 3.00% | 3.00% | 5.00% | 5.00% | 3.00% |
| | 1,6-hexanediol diacrylate | 27.16% | 10.16% | 11.66% | 11.16% | 39.99% | 24.99% | 11.76% |
| Monofunctional monomers | Ethyl carbitol acrylate | 3.00% | 3.00% | 3.00% | 3.00% | 13.00% | 13.00% | 3.00% |
| | Benzyl acrylate | 24.00% | 24.00% | 24.00% | 24.00% | 3.00% | 3.00% | 24.00% |
| | Isobornyl acrylate | 10.00% | 10.00% | 10.00% | 10.00% | | | 10.00% |
| | Acryloyl morpholine | 5.00% | 5.00% | 5.00% | 5.00% | 5.00% | 5.00% | 5.00% |
| | Lauryl acrylate | 5.00% | 5.00% | 5.00% | 5.00% | | | 5.00% |
| | Stearyl acrylate | 5.00% | 5.00% | 5.00% | 5.00% | | | 5.00% |
| | Vinyl caprolactam | 5.00% | 5.00% | 5.00% | 5.00% | | | 5.00% |
| Photopolymerization initiators | OMNIRAD 819 | | | | | | | |
| | TR-20400 | 3.00% | 20.00% | 20.00% | 20.00% | 5.00% | 20.00% | 20.00% |
| Sensitizers | OMNIRAD EDB | | | | | | | |
| | OMNIRAD DETX | 2.00% | 2.00% | 0.50% | 1.00% | 2.00% | 2.00% | 2.00% |
| Polymerization inhibitor | UV22 | 0.40% | 0.40% | 0.40% | 0.40% | | | 0.40% |
| Leveling agent | BYK-377 | 0.20% | 0.20% | 0.20% | 0.20% | 0.01% | 0.01% | 0.20% |
| Total | | 100.00% | | | | | | |
| Evaluation results | Viscosity (mPa•s) | 18.9 | 25.1 | 18.2 | 23.1 | 18.2 | 23.1 | 23.4 |
| | Solubility | ○ | ○ | ○ | ○ | ○ | ○ | ○ |
| | LED curability | ○ | ○ | ○ | ○ | ○ | ○ | ○ |
| | Anti-yellowing property | ○ | ○ | ○ | ○ | ○ | ○ | ○ |

| | | Examples | | Comparative Examples | | | | |
|---|---|---|---|---|---|---|---|---|
| | | 8 | 9 | 1 | 2 | 3 | 4 | 5 |
| Pigments | Pigment Yellow 150 | | 2.28% | | | | | |
| | Pigment Red 122 | 1.60% | | | | | | |
| | Pigment Red 254 | 1.92% | | | | | | |
| | Pigment Blue 15:4 | | | | | | | |
| | Pigment White 6 | | | | | | | 20.00% |
| | Pigment Black 7 | | | 1.60% | 1.60% | 1.60% | 1.60% | |
| Pigment dispersants | SOLSPERSE 56000 | | | 0.64% | 0.64% | 0.64% | 0.64% | |
| | BYKJET 9151 | 0.77% | | | | | | |
| | SOLSPERSE 36000 | 0.64% | | | | | | 1.00% |
| | AJISPER PB821 | | | | | | | 1.00% |
| Amine-modified oligomer | CN371 NS | 2.00% | 2.00% | | 5.00% | 5.00% | | 5.00% |
| Bisphenol A epoxy acrylate oligomer | MIRAMER PE-210 | | | | | | 5.00% | |
| Polyfunctional monomers | 3EO-modified trimethylolpropane triacrylate | 3.00% | 3.00% | 10.00% | 10.00% | 10.00% | 10.00% | 5.00% |
| | 1,6-hexanediol diacrylate | 10.47% | 13.12% | 18.16% | 5.16% | 3.16% | 13.16% | 39.99% |
| Monofunctional monomers | Ethyl carbitol acrylate | 3.00% | 3.00% | 3.00% | 3.00% | 3.00% | 3.00% | 13.00% |
| | Benzyl acrylate | 24.00% | 24.00% | 24.00% | 24.00% | 24.00% | 24.00% | 3.00% |
| | Isobornyl acrylate | 10.00% | 10.00% | 10.00% | 10.00% | 10.00% | 10.00% | |
| | Acryloyl morpholine | 5.00% | 5.00% | 5.00% | 5.00% | 5.00% | 5.00% | 5.00% |
| | Lauryl acrylate | 5.00% | 5.00% | 5.00% | 5.00% | 5.00% | 5.00% | |
| | Stearyl acrylate | 5.00% | 5.00% | 5.00% | 5.00% | 5.00% | 5.00% | |
| | Vinyl caprolactam | 5.00% | 5.00% | 5.00% | 5.00% | 5.00% | 5.00% | |
| Photopolymerization initiators | OMNIRAD 819 | | | | | | | 5.00% |
| | TR-20400 | 20.00% | 20.00% | 10.00% | 20.00% | 20.00% | 10.00% | |
| Sensitizers | OMNIRAD EDB | | | | | 2.00% | | |
| | OMNIRAD DETX | 2.00% | 2.00% | 2.00% | | | 2.00% | 2.00% |
| Polymerization inhibitor | UV22 | 0.40% | 0.40% | 0.40% | 0.40% | 0.40% | 0.40% | |
| Leveling agent | BYK-377 | 0.20% | 0.20% | 0.20% | 0.20% | 0.20% | 0.20% | 0.01% |
| Total | | 100.00% | | | | | | |
| Evaluation results | Viscosity (mPa•s) | 23.3 | 23.7 | 15.1 | 23.4 | 24.2 | 18.9 | 18.5 |
| | Solubility | ○ | ○ | ○ | ○ | ○ | ○ | ○ |
| | LED curability | ○ | ○ | x | x | x | x | ○ |
| | Anti-yellowing property | ○ | ○ | ○ | ○ | ○ | ○ | x |

Examples 1 to 9 based on ink compositions conforming to the present invention show that the ink compositions according to the present invention have appropriate viscosity as well as excellent solubility, LED curability, and anti-yellowing property.

By contrast, Comparative Example 1 not containing amine-modified oligomer, and Comparative Examples 2 and 3 not containing thioxanthone-based sensitizer, had poor LED curability. Additionally, Comparative Example 4 containing a bisphenol A epoxy acrylate not modified by amine, in place of amine-modified oligomer, also had poor LED curability. Furthermore, Comparative Example 5 not containing any photopolymerization initiator expressed by formula (1) had poor anti-yellowing property.

## Claims

1. A photocurable inkjet printing ink composition containing:
photopolymerizable components wherein 1.0 to 10.0% by mass of all photopolymerizable components are amine-modified oligomers, and
1.0 to 40.0 parts by mass of photopolymerization initiators expressed by formula (1) below, and 0.3 to 5.0 parts by mass of thioxanthone-based sensitizers relative to all photopolymerizable components representing 100 parts by mass:

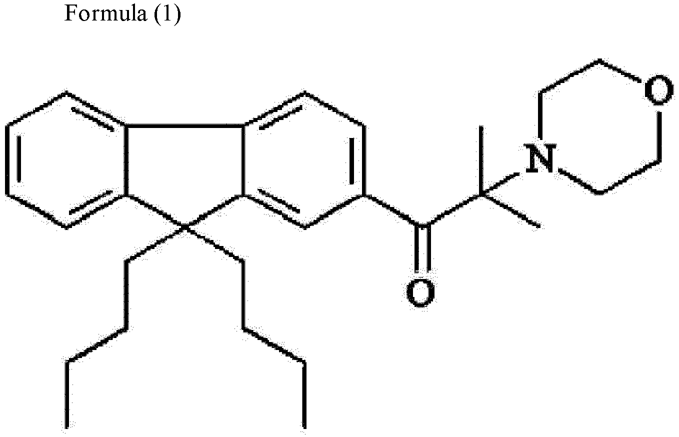

2. The photocurable inkjet printing ink composition according to claim 1, wherein the photopolymerizable components contain 25.0 to 85.0% by mass of monofunctional monomers relative to all photopolymerizable components.

3. The photocurable inkjet printing ink composition according to claim 1 or 2 wherein the photopolymerizable components contain 10.0 to 70.0% by mass of polyfunctional monomers relative to all photopolymerizable components.

4. The photocurable inkjet printing ink composition according to any one of claims 1 to 3, having a viscosity at 25°C of 5.0 to 28.0 mPa•s.

## Patentansprüche

1. Photohärtbare Tintenstrahldrucktintenzusammensetzung, enthaltend:
photopolymerisierbare Komponenten, wobei 1,0 bis 10,0 Massen-% aller photopolymerisierbaren Komponenten aminmodifizierte Oligomere sind, und
1,0 bis 40,0 Masseteile Photopolymerisationsinitiatoren der nachstehenden Formel (1) und 0,3 bis 5,0 Masseteile Sensibilisatoren auf Thioxanthonbasis, bezogen auf alle photopolymerisierbaren Komponenten, die 100 Masseteile ausmachen:

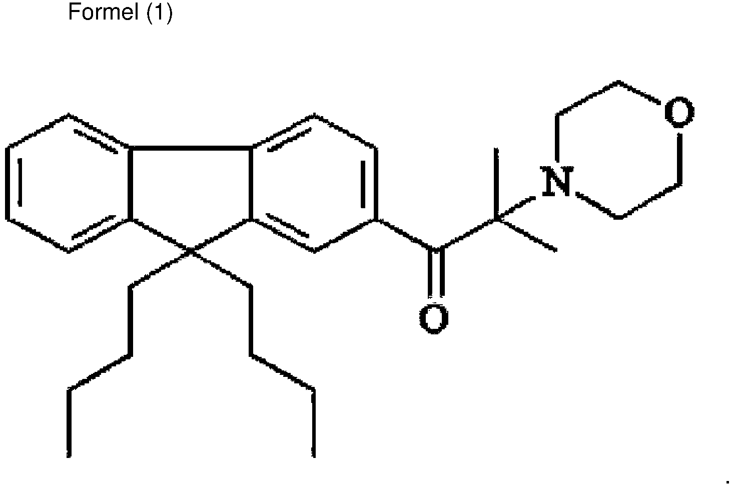

2. Photohärtbare Tintenstrahldrucktintenzusammensetzung nach Anspruch 1, wobei die photopolymerisierbaren Komponenten 25,0 bis 85,0 Massen-% monofunktionelle Monomere, bezogen auf alle photopolymerisierbaren Komponenten, enthalten.

3. Photohärtbare Tintenstrahldrucktintenzusammensetzung nach Anspruch 1 oder 2, wobei die photopolymerisierbaren Komponenten 10,0 bis 70,0 Massen-% polyfunktionelle Monomere, bezogen auf alle photopolymerisierbaren Komponenten, enthalten.

4. Photohärtbare Tintenstrahldrucktintenzusammensetzung nach einem der Ansprüche 1 bis 3, die bei 25 °C eine Viskosität von 5,0 bis 28,0 mPa·s aufweist.

## Revendications

1. Composition d'encre photodurcissable pour impression à jet d'encre, contenant :
des composants photopolymérisables dans lesquels 1,0 % à 10,0 % en masse de tous les composants photopolymérisables sont des oligomères modifiés par des amines, et
de 1,0 à 40,0 parties en masse d'initiateurs de photopolymérisation répondant à la formule (1) ci-dessous et de 0,3 à 5,0 parties en masse de sensibilisateurs à base de thioxanthone par rapport à tous les composants photopolymérisables, qui représentent 100 parties en masse :

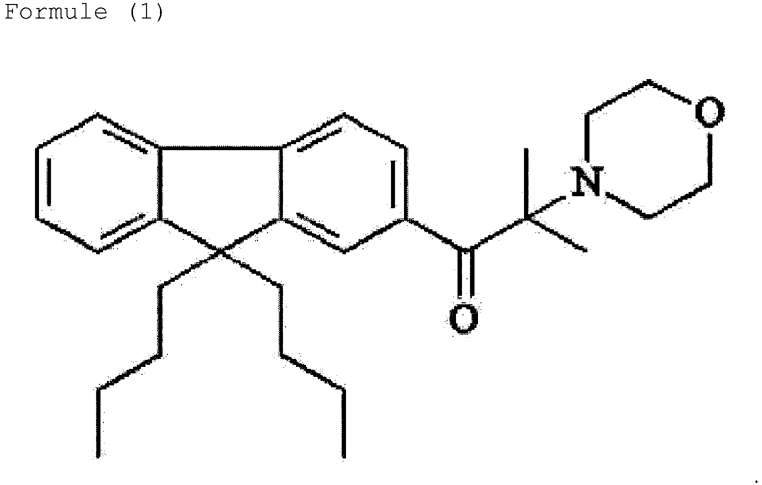

2. Composition d'encre photodurcissable pour impression à jet d'encre selon la revendication 1, dans laquelle les composants photopolymérisables contiennent de 25,0 % à 85,0 % en masse de monomères monofonctionnels par rapport à tous les composants photopolymérisables.

3. Composition d'encre photodurcissable pour impression à jet d'encre selon la revendication 1 ou 2, dans laquelle les composants photopolymérisables contiennent de 10,0 % à 70,0 % en masse de monomères polyfonctionnels par rapport à tous les composants photopolymérisables.

4. Composition d'encre photodurcissable pour impression à jet d'encre selon l'une quelconque des revendications 1 à 3, présentant une viscosité à 25 °C de 5,0 à 28,0 mPa·s.
